# EUROPEAN PATENT APPLICATION

(11) **EP 4 617 508 A1**
(43) Date of publication of application: **17.09.2025**
(21) Application number: 23903916.7
(22) Date of filing: 11.12.2023
(51) Int. Cl.: F15B 19/00, F15B 20/00

(54) **CYLINDER MONITORING DEVICE BASED ON FLOW ANALYSIS, AND METHOD FOR OPERATING SAME**

(30) Priority: 12.12.2022 KR 20220173011; 10.10.2023 KR 20230134614
(71) Applicant: LG Energy Solution, Ltd., Seoul 07335 (KR)
(72) Inventor: LEE, Su Ho, Daejeon 34122 (KR); AN, Jong Man, Daejeon 34122 (KR)
(74) Representative: Plasseraud IP
(86) International application number: PCT/KR2023/020289
(87) International publication number: WO 2024/128713

(57) **Abstract**

A cylinder monitoring apparatus according to an embodiment disclosed in this document may include a communication circuit obtaining flow data representing flow measured by a flow sensor sensing air inflow to or air outflow from a plurality of air cylinders operating a chamber including a lower body and a upper body positioned above the lower body, and a processor determining the operation status, including whether the plurality of the cylinders are operating in or out of sync, based on the flow data.

## Description

### [TECHNICAL FIELD]

### CROSS-REFERENCE TO RELATED APPLICATION

This application claims priorities to and the benefit of Korean Patent Application Nos. 10-2022-0173011, filed on December 12, 2022, and 10-2023-0134614, filed on October 10, 2023, in the Korean Intellectual Property Office, the entire contents of which are incorporated herein by reference.

### TECHNICAL FIELD

The embodiments disclosed in this document relate to a flow analysis-based cylinder monitoring apparatus and method.

### [BACKGROUND ART]

Recently, research and development on secondary batteries have been actively conducted. Here, the secondary battery is a rechargeable battery and includes all of the conventional Ni/Cd batteries, Ni/MH batteries, and recent lithium ion batteries. Among the secondary batteries, Lithium ion batteries have an advantage of much higher energy density than the conventional Ni/Cd batteries and Ni/MH batteries. In addition, Lithium-ion batteries can be manufactured small and lightweight enough to be used as power sources for mobile devices and recently expand their usage range to power sources for electric vehicles, drawing attention as a next-generation energy storage medium.

Secondary batteries are manufactured through the process of placing an electrode assembly consisting of a positive electrode, a negative electrode, and a separator interposed between the positive and negative electrodes inside the battery case and injecting electrolyte, i.e., electrolytic solution, and sealing the battery case.

The injected electrolyte permeates between the positive electrode plate, negative electrode plate, and separator constituting the electrode assembly due to capillary forces, but the impregnation of electrolyte is not easy due to the characteristics of the microstructure of the porous electrode and the physical and chemical properties of the components constituting the electrode and battery.

To enhance the electrolyte impregnation of secondary batteries, a vacuum-pressure chamber is employed to apply pressurization and depressurization to the secondary battery after the injection of electrolyte. Such vacuum-pressure chambers include an air cylinder for vertically moving a portion of the chamber body that accommodates the secondary battery; however, there was no separate device to detect the operating status and abnormal signs of the air cylinder.

### [DISCLOSURE]

### [TECHNICAL PROBLEM]

A vacuum-pressure chamber includes a flow sensor that detects the flow of air being supplied to or discharged from the cylinder. However, the flow sensor alone cannot detect and determine whether the cylinder is operating synchronously or whether a failure has occurred, requiring a separate device and/or program to assess the condition of the cylinder.

The embodiments disclosed in this document may provide a cylinder monitoring apparatus and method capable of determining the status of the air cylinder by analyzing the flow data of the air cylinder included in the vacuum-pressure chamber.

The technical objects of the embodiments disclosed in this document are not limited to the aforesaid, and other objects not described herein with be clearly understood by those skilled in the art from the descriptions below.

### [TECHNICAL SOLUTION]

A cylinder monitoring apparatus according to an embodiment disclosed in this document may include a communication circuit obtaining flow data representing flow measured by a flow sensor sensing air inflow to or air outflow from a plurality of air cylinders operating a chamber including a lower body and a upper body positioned above the lower body, and a processor determining the operation status, including whether the plurality of the cylinders are operating in or out of sync, based on the flow data.

In the cylinder monitoring apparatus according to an embodiment disclosed in this document, the plurality of air cylinders may include a first air cylinder and a second air cylinder, the flow data may include first flow data corresponding to a first air cylinder and second flow data corresponding to a second air cylinder, and the processor may determine the operation in or out of sync by comparing the first flow data and the second flow data.

In the cylinder monitoring apparatus according to an embodiment disclosed in this document, the processor may determine that the operation is out of sync based on the difference between the flow of the first air cylinder and the flow of the second air cylinder being above a predetermined value at a time point.

In the cylinder monitoring apparatus according to an embodiment disclosed in this document, the processor may determine an abnormality in the plurality of cylinders by comparing the flow data with a flow upper limit curve and a flow lower limit curve included in reference operating data.

In the cylinder monitoring apparatus according to an embodiment disclosed in this document, the processor may determine, among the plurality of air cylinders, an air cylinder, whose flow drops below a lower limit value on the flow lower limit curve and fails to recover to a normal range based on the reference operating data, is in an operation stop state.

In the cylinder monitoring apparatus according to an embodiment disclosed in this document, the processor may determine, among the plurality of air cylinders, an air cylinder, whose flow rises above an upper limit value on the flow upper limit curve and fails to recover to a normal range based on the reference operating data, is in an air leak state.

In the cylinder monitoring apparatus according to an embodiment disclosed in this document, the processor may determine, among the plurality of air cylinders, an air cylinder, whose flow rises above an upper limit value on the flow upper limit curve and then drops below the upper limit value or drops below a lower limit value on the flow lower limit curve and then rises above the lower limit value, is in a load abnormality state.

The cylinder monitoring apparatus according to an embodiment disclosed in this document may further includes a display displaying a graph representing the flow of air supplied to or discharged from the plurality of air cylinder based on the flow data.

A cylinder monitoring method according to an embodiment disclosed in this document may include obtaining flow data representing flow measured by a flow sensor sensing air inflow to or air outflow from a plurality of air cylinders operating a chamber comprising a lower body and a upper body positioned above the lower body, and determining the operation status, including whether the plurality of the cylinders are operating in or out of sync, based on the flow data.

In the cylinder monitoring method according to an embodiment disclosed in this document, the plurality of air cylinders may include a first air cylinder and a second air cylinder, the flow data may include first flow data corresponding to a first air cylinder and second flow data corresponding to a second air cylinder, and the determining of the operation status may include determining the operation in or out of sync by comparing the first flow data and the second flow data.

In the cylinder monitoring method according to an embodiment disclosed in this document, the determining of the operation in or out of sync may include determining that the operation is out of sync based on the difference between the flow of the first air cylinder and the flow of the second air cylinder being above a predetermined value at a time point.

In the cylinder monitoring method according to an embodiment disclosed in this document, the determining of the operation status may include determining an abnormality in the plurality of cylinders by comparing the flow data with a flow upper limit curve and a flow lower limit curve included in reference operating data.

In the cylinder monitoring method according to an embodiment disclosed in this document, the determining of the abnormality in the plurality of cylinders may include determining, among the plurality of air cylinders, an air cylinder, whose flow drops below a lower limit value on the flow lower limit curve and fails to recover to a normal range based on the reference operating data, is in an operation stop state.

In the cylinder monitoring method according to an embodiment disclosed in this document, the determining of the abnormality in the plurality of cylinders may include determining, among the plurality of air cylinders, an air cylinder, whose flow rises above an upper limit value on the flow upper limit curve and fails to recover to a normal range based on the reference operating data, is in an air leak state.

In the cylinder monitoring method according to an embodiment disclosed in this document, the determining of the abnormality in the plurality of cylinders may include determining, among the plurality of air cylinders, an air cylinder, whose flow rises above an upper limit value on the flow upper limit curve and then drops below the upper limit value or drops below a lower limit value on the flow lower limit curve and then rises above the lower limit value, is in a load abnormality state.

### [ADVANTAGEOUS EFFECTS]

According to the embodiments disclosed in this document, it is possible to monitor the status of the air cylinder included in the vacuum-pressure chamber and provide the administrator with the confirmed abnormal signs in real-time, allowing for early prevention of problems arising from air cylinder malfunctions.

In addition, various effects identified directly or indirectly through this document can be provided.

### [DESCRIPTION OF DRAWINGS]

FIG. 1 is a perspective view of a vertically movable chamber according to an embodiment;
FIG. 2 is a perspective view of a control unit for operating a plurality of air cylinders according to an embodiment;
FIG. 3 is a block diagram of a cylinder monitoring apparatus according to an embodiment;
FIG. 4 is a graph representing reference operating data and flow data according to an embodiment;
FIG. 5 is a graph representing reference operating data and flow data according to an embodiment;
FIG. 6 is a graph representing reference operating data and flow data according to an embodiment;
FIG. 7 is a graph representing reference operating data and flow data according to an embodiment;
FIG. 8 is a flowchart illustrating the operation of a cylinder monitoring apparatus according to an embodiment;
FIG. 9 is a flowchart illustrating the operation of a cylinder monitoring apparatus according to an embodiment; and
FIG. 10 is a flowchart illustrating the operation of a cylinder monitoring apparatus according to an embodiment.

### [MODE FOR INVENTION]

Hereinafter, various embodiments of the present invention will be described with reference to the accompanying drawings. However, the description is not intended to limit the present invention to particular embodiments, and it should be construed as including various modifications, equivalents, and/or alternatives of the embodiments described herein.

Various embodiments disclosed in this document and terms used therein are not intended to limit the technical features described in this document to specific embodiments, and the disclosure should be construed as including various modifications, equivalents, and/or alternatives of the corresponding embodiments. In connection with the description of the drawings, like reference numbers may be used for like or related elements. The singular form of a noun corresponding to an item may include one item or a plurality of items unless the relevant context clearly dictates otherwise.

In this document, each of the phrases such as "A or B", "at least one of A and B", "at least one of A or B", "A, B or C", "at least one of A, B and C", and "at least one of A, B, or C" may include any of the items listed together in the corresponding phrase or any possible combination thereof. Terms such as "the first", "the second", "first", "second", "A", "B", "(a)", or "(b)" may be used simply to distinguish such components from other components and do not limit the corresponding components in other aspects (e.g., importance or order) unless otherwise stated specifically.

In this document, when it is mentioned that a (e.g., first) component is "connected", "coupled", "accessed", with or without the terms "functionally" or "communicatively", to another (e.g., second) component, it means that the component can be connected to the other component directly (e.g., wired), wirelessly, or via a third component. According to various embodiments, each component (e.g., module or program) of the components described above may include a single object or a plurality of objects, and some of the multiple objects may be separately disposed in other components.

According to various embodiments, one or more components or operations among the aforementioned components may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by the corresponding component of the plurality of components prior to the integration. According to various embodiments, operations performed by modules, programs, or other components are executed sequentially, in parallel, iteratively, or heuristically, or one or more of the operations are executed in a different order, omitted, or one or more other operations may be added.

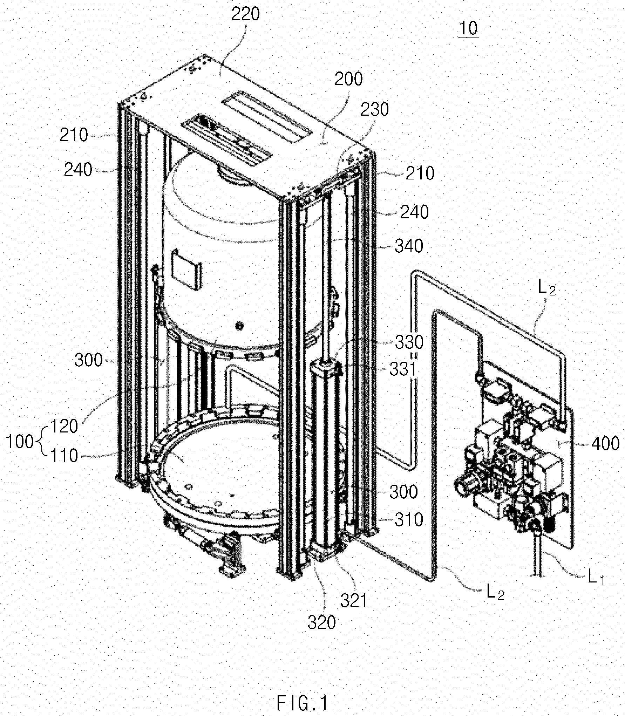

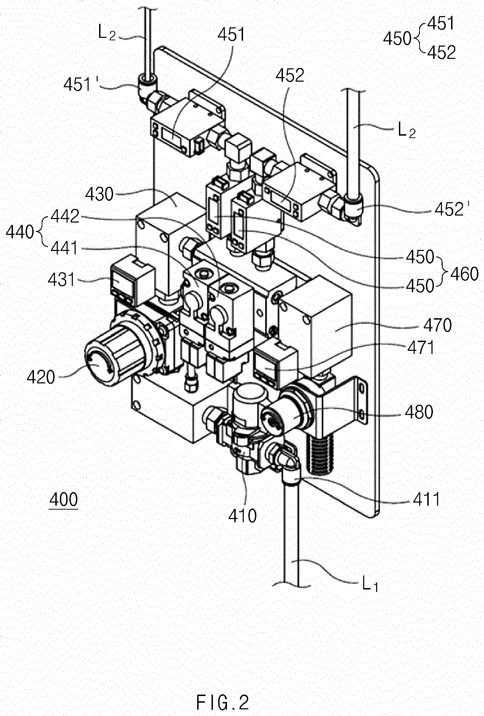

Hereinafter, a description is made of the configuration of a vertically movable chamber according to an embodiment with reference to FIGS. 1 and 2.

FIG. 1 is a perspective view of a vertically movable chamber according to an embodiment.

With reference to FIG. 1, the vertically movable chamber 10 may include a chamber body 100 for accommodating a target object (not shown), a chamber frame 200 enveloping the chamber body 100, a plurality of air cylinders 300 for vertically moving a portion of the chamber body 100, and a control unit 400 for operating the plurality of air cylinders 300.

Here, the target object may be a secondary battery, more specifically, a cylindrical secondary battery in a state where the electrolyte is injected, and while not necessarily limited to this, for the convenience of explanation, it is assumed that a secondary battery is accommodated in the chamber 10.

According to one embodiment, the chamber body 100 may be composed of a lower body 110 and an upper body 120. According to an embodiment, the lower body 110 may have an approximately circular plate-like structure. According to an embodiment, the upper body 120 may be positioned above the lower body 110 to move up and down and have a hollow hemisphere or semi-ellipsoid shape.

The upper surface of the lower body 110 accommodates a secondary battery for the impregnation of electrolyte, and to achieve rapid and uniform impregnation through alternating pressurization and depressurization, the lower body 110 may have a structure that maintains sealing to block external interference when closely adhered to the upper body 120 and is securely fastened to prevent separation even under applied internal pressure. In addition, the lower body 110 or upper body 120 may be equipped with an openable port for depressurization or pressurization.

According to one embodiment, the chamber frame 200 may include a vertical frame 210, a horizontal frame 220, a support plate 230, and a guide frame 240.

According to an embodiment, the vertical frame 210 is formed in pairs positioned facing each other with the chamber body 100 therebetween, and the vertical frames 210 located on each side may be arranged in twos spaced at a predetermined interval. Therefore, the vertical frames 210 may be composed of a total of 4.

According to an embodiment, the horizontal frame 220 is fixed to the upper part of the four vertical frames 210 and may have an approximately rectangular plate-like structure.

According to an embodiment, the support plate 230 is positioned between the horizontal frame 220 and the upper body 120 and may move up and down by the operation of the plurality of air cylinders 300 while securely supporting the upper body 120.

In an embodiment, the guide frame 240 is intended to guide the stable vertical movement of the support plate 230 and is arranged to penetrate the guide frame 240 vertically. In detail, the guide frame 240 has an approximately rod-shape of which the lower end is positioned on the ground and the opposite end fits against the lower surface of the horizontal frame 220, and the guide frame 240 may be provided in quantities of 4 penetrating each corner of the guide frame 240, but the quantity may increase or decrease as needed.

In an embodiment, the plurality of air cylinders 300 are positioned between the vertical frames 210, more specifically, between a pair of guide frames 240, to support the support plate 230 stably, and may be installed one by one, facing each other along the edge of the support plate 230. For example, the plurality of air cylinders 300 may include a first air cylinder positioned on the left side of the chamber body 100 and a second air cylinder positioned on the right side of the chamber body 100.

According to an embodiment, the plurality of air cylinders 300 may include a cylindrical cylinder tube 310, a head cover 320, a rod cover 330, and a piston 340.

According to an embodiment, the head cover 320 is positioned to seal the head-side end of the cylinder tube 310 and includes a head-side port 321 facilitating the inflow of air during the rise of the support plate 230 and the outflow of air during the descent of the support plate 230, and a second air duct connecting the head-side port 321 to a flow sensor.

According to an embodiment, the rod cover 330 seals the rod-end of the cylinder tube 310 and may be equipped with a rod-side port 331 that is kept open at all times.

According to an embodiment, the piston 340 may divide the cylinder chamber while being in close contact with the inner side of the cylinder tube 310.

The multiple air cylinders 300 are well-known technologies, so a more detailed explanation is omitted.

FIG. 2 is a perspective view of a control unit for operating a plurality of air cylinders according to an embodiment.

According to an embodiment, the control unit 400 may control the operation of the plurality of air cylinders 300 by controlling the inflow and outflow of air.

With reference to FIG. 2, the control unit 400 may include a main valve 410, a regulator 420, a first pressure sensor 430, a pilot valve 440, an inflow sensor 450, an outflow sensor 460, a second pressure sensor 470, and a relief valve 480.

According to an embodiment, the main valve 410 controls the inflow of air from an air compressor (not shown) and may include an air inlet 411 on one side for connection to a first air duct L₁ connected to the air compressor.

According to an embodiment, the regulator 420 may be positioned downstream of the main valve 410 to adjust the pressure of the inflow air such that the pressure set for the rise of the plurality of air cylinders 300 is transmitted to the plurality of air cylinders 300.

According to an embodiment, the first pressure sensor 430 is positioned downstream of the regulator 420 to measure the pressure of the air passing through the regulator 420. Here, the first pressure sensor 430 may be equipped with a first display unit 431 to visually display the pressure measured in real-time and may have additional functionality to generate warning signals, alarms, or alerts when the pressure exceeds a predetermined range or when abnormal pressure conditions persist for a predetermined period.

According to an embodiment, the pilot valve 440 is positioned between the first pressure sensor 430, the outflow sensor 460, and the second pressure sensor 470, i.e., on the path of inflow air and outflow air, allowing to switch the direction of air flow.

According to an embodiment, the inflow sensor 450 functions as a unidirectional flow sensor to measure the flow of air passing through the first pressure sensor 430, pilot valve 440, and outflow sensor 460 sequentially. The inflow sensor 450 may be provided in the same quantities as the head-side ports of the plurality of air cylinders 300. For example, since there are two air cylinders with one head-side port, the inflow sensor 450 may include a first inflow sensor 451 and a second inflow sensor 452 for supplying air to each head-side port. The first inflow sensor 451 and the second inflow sensor 452 are provided with a first air inlet 451' and a second air inlet 452', respectively, which may be connected to the second air duct L₂. The second air duct L₂ may be used as a passage for compressed air to be discharged when lowering the air cylinders.

According to an embodiment, the outflow sensor 460 may be positioned between the inflow sensor 450 and the pilot valve 440 to measure the unidirectional flow of air being discharged from the plurality of air cylinders 300. The outflow sensor 460 may include a first outflow sensor 461 and a second outflow sensor 462 to measure the air flow discharged from each head-side port.

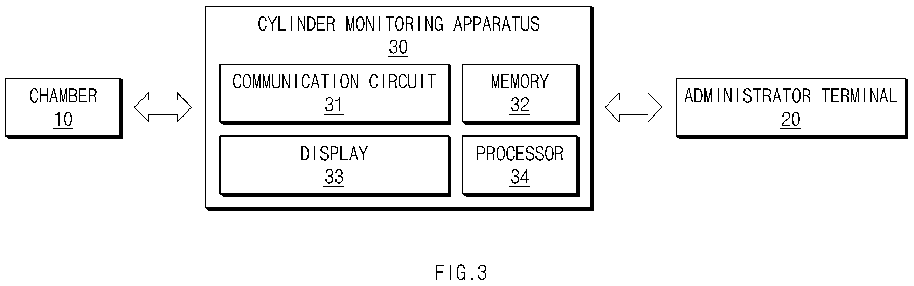

Meanwhile, although not shown in FIG. 2, the control unit 400 may include a communication circuit that can transmit, via wired and/or wireless means, flow data representing the inflow measured by the inflow sensor 450 and/or the outflow measured by the outflow sensor 460 to an external device (e.g., the cylinder monitoring apparatus 30 in FIG. 3).

According to an embodiment, the second pressure sensor 470 is positioned downstream of the outflow sensor 460 to measure the pressure of the air passing through the outflow sensor 460, more specifically, the pressure of the air passing through the outflow sensor 460 and the pilot valve 440 sequentially. The second pressure sensor may be equipped with a second display unit 471 to visually display the incoming air pressure in real-time and may have additional functionality to generate warning signals, alarms, or alerts when the pressure exceeds a predetermined range or when abnormal pressure conditions persist for a predetermined period.

According to an embodiment, the relief valve 480 may be positioned downstream of the second pressure sensor 470 to control the discharge of air from the cylinder tube 310 while maintaining a predetermined pressure. That is, by regulating the air pressure in the cylinder tube 310, the chamber body 100 may be restricted from descending abruptly, preventing unexpected accidents that may be caused by the descending upper body 120.

FIG. 3 is a block diagram of a cylinder monitoring apparatus according to an embodiment. FIG. 3 may be described based on the configurations of FIGS. 1 and 2.

With reference to FIG. 3, the cylinder monitoring apparatus 30 may include a communication circuit 31, a memory 32, a display 33 and/or a processor 34. According to the embodiment, the cylinder monitoring apparatus 30 shown in FIG. 3 may include at least one additional component (e.g., input device or output device) not shown in FIG. 3, or omit at least one component (e.g., display 33) shown in FIG. 3.

According to an embodiment, the communication circuit 31 may establish a wired and/or wireless communication channel between the cylinder monitoring apparatus 30 and the chamber 10 and/or administrator terminal 20 and exchange data with the chamber 10 and/or the administrator terminal 20 through the established communication channel.

According to an embodiment, the communication circuit 31 may acquire flow data representing the flow measured by the inflow sensor 450 and/or the outflow sensor 460 of the chamber 10. For example, the communication circuit 31 may obtain the flow data from the communication circuit included in the chamber 10 via wired and/or wireless means.

According to an embodiment, the flow data may represent the inflow or outflow of air supplied to or discharged from the plurality of air cylinders 300. According to an embodiment, the flow data may include the first flow data corresponding to the first air cylinder located on the left side of the chamber body 100 among the plurality of air cylinders 300 and the second flow data corresponding to the second air cylinder located on the right side of the chamber body 100. In detail, the first flow data (or second flow data) may represent the flow of air supplied to or discharged from the first air cylinder (or second air cylinder).

According to an embodiment, the communication circuit 31 may transmit the flow data and/or result data processed by the processor 34 to the administrator terminal 30 via wired and/or wireless means. Here, the result data may represent the status indicating the synchronous operation of the plurality of air cylinders 300, which will be described later.

According to an embodiment, the memory 32 may include volatile memory and/or non-volatile memory.

According to an embodiment, the memory 32 may store data used by at least one component of the cylinder monitoring apparatus 30 (e.g., processor 34). For example, the data may include software (or related instructions), input data, or output data. In an embodiment, the instructions may be executed by the processor 34 for the cylinder monitoring apparatus 30 to perform operations defined by the instructions.

According to an embodiment, the memory 32 may store reference operating data. Here, the reference operating data may be data preset based on the flow data of normally operating air cylinders. For example, the cylinder monitoring apparatus 30 may generate flow upper limit and flow lower limit curves based on the flow data of normally operating air cylinders as reference operating data and store the reference operating data in the memory 32.

According to an embodiment, the display 33 may display the flow data and/or the result data processed by the processor 34. For example, the display 33 may display a graph representing the flow of air supplied to or discharged from the plurality of air cylinders 300.

According to an embodiment, the processor 34 may include a central processing unit, an application processor, a graphic processing unit, a neural processing unit (NPU), an image signal processor, a sensor hub processor, or a communication processor.

According to an embodiment, the processor 34 may execute software stored in the memory 32 to control at least one other component (e.g., hardware or software component) connected to the processor 32 in the cylinder monitoring apparatus 30 and perform various data processing or computations.

According to an embodiment, the processor 34 may determine the status of the plurality of air cylinders 300. Here, the status may include the synchronous operation and/or abnormality of the plurality of air cylinders 300. The processor 34 may determine the status of the plurality of air cylinders 300 based on the flow data acquired via the communication circuit 31.

According to an embodiment, the processor 34 may determine whether the first and second air cylinders are operating in sync by comparing the first flow data corresponding to the first air cylinder and the second flow data corresponding to the second air cylinder among the plurality of air cylinders 300.

According to an embodiment, the processor 34 may determine whether the first and second air cylinders are operating in sync by comparing the start time points and end time points of their operation. For example, the processor 34 may determine that the first and second air cylinders are operating in sync when the start and end time points are both identical.

According to an embodiment, the processor 34 may calculate the temporal difference between the flow of the first air cylinder and the flow of the second air cylinder and determine whether the first and second air cylinders are operating in sync based on the calculated difference. For example, the processor 34 may determine that the first and second air cylinders are operating out of sync when there is a time point where the flow difference between the first and second air cylinders above a predetermined value.

According to an embodiment, the processor 34 may consider both the start and end times of operation and the difference in flow to determine the synchronous operation. For example, the processor 34 may determine that the first and second air cylinders are operating in sync based on the identical start and end time points of the first and second air cylinders and the difference in flow remaining below a predetermined value.

According to an embodiment, the processor 34 may compare the flow data with the reference operating data stored in the memory 32 to determine abnormalities (e.g., operation stop, air leak, and/or load abnormalities) in the plurality of air cylinders 300. The processor 34 may compare the flow data with the flow upper limit curve and flow lower limit curve included in the reference operating data to determine abnormalities in the plurality of air cylinders 300.

According to an embodiment, the processor 34 may determine that an air cylinder, whose flow drops below the lower limit value on the flow lower limit curve and fails to recover to the normal range based on the reference operating data, is in an operation stop state. Here, the normal range may refer to the range of flow between the flow upper limit and the flow lower limit of the reference operating data.

According to an embodiment, the processor 34 may determine that an air cylinder, whose flow rises above the upper limit value on the flow upper limit curve and fails to recover to the normal range, is in an air leak state. Here, an air leak may refers to the escape of air due to issues such as cracks in the air cylinder, resulting in the unintended leakage of air flowing into or out of the air cylinder.

According to an embodiment, the processor 34 may determine that an air cylinder, whose flow rises above the upper limit value on the flow upper limit curve and then drops below the upper limit value or drops below the lower limit value on the flow lower limit curve and then rises above the lower limit value, is in a load abnormality state.

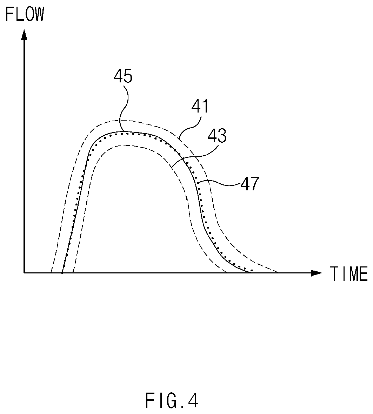

Hereinafter, a description is made of an example where the processor 34 determines the state of the plurality of air cylinders 300 based on flow data, with reference to FIGS. 4 to 7.

FIGS. 4 to 7 are graphs representing reference operating data and flow data according to an embodiment.

With reference to FIG. 4, the graph shows a flow upper limit curve 41 and a flow lower limit curve 43 included in the reference operating data, first flow data 45 corresponding to the first air cylinder, and second flow data 47 corresponding to the second air cylinder.

According to an embodiment, the processor 34, based on the flow data 45 and 47, may determine that the plurality of air cylinders 300 are operating in sync because the start and end time points of operation of the first and second air cylinders are identical and the flow difference is maintained below a predetermined value.

According to an embodiment, the processor may determine, based on the flow data 45 and 47, that the plurality of air cylinders 300 are in a normal state because the flow of the first and second air cylinders is within the normal range of the reference operating data.

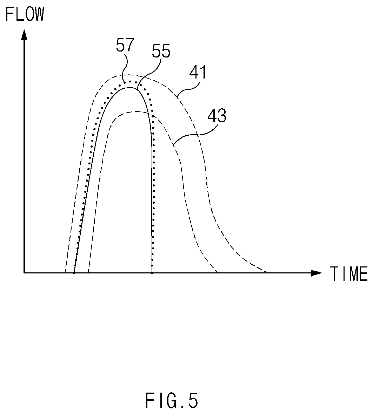

With reference to FIG. 5, the graph shows a flow upper limit curve 41 and a flow lower limit curve 43 included in the reference operating data, first flow data 55 corresponding to the first air cylinder, and second flow data 57 corresponding to the second air cylinder.

According to an embodiment, the processor 34, based on the flow data 55 and 57, may determine that the plurality of air cylinders 300 are operating in sync because the start and end time points of operation of the first and second air cylinders are identical and the flow difference is maintained below a predetermined value.

According to an embodiment, the processor 34, based on the flow data 55 and 57, may determine that the plurality of air cylinders 30 are in an operation stop state because the flow of the first and second air cylinders drops below the lower limit value on the flow lower limit curve 43 and fails to recover to the normal range based on the reference operating data.

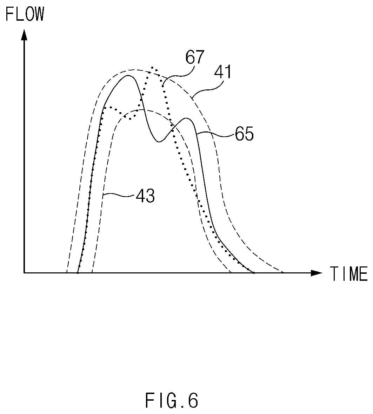

With reference to FIG. 6, the graph shows a flow upper limit curve 41 and a flow lower limit curve 43 included in the reference operating data, first flow data 65 corresponding to the first air cylinder, and second flow data 67 corresponding to the second air cylinder.

According to an embodiment, the processor 34, based on the flow data 65 and 67, may determine that the plurality of air cylinders 300 are operating out of sync because there is a time point where the flow difference exceeds a predetermined value despite the start and end time points of operation of the first and second air cylinders being identical.

According to an embodiment, the processor 34, based on the first flow data 65, may determine that the first air cylinder is in a load abnormality state because the flow of the first air cylinder drops below the lower limit value on the flow lower limit curve 43 and subsequently rises above the lower limit value. The processor 34, based on the second flow data 67, may also determine that the second air cylinder is in a load abnormality state because there are intervals where the flow drops below the lower limit value on the flow lower limit curve 43 and then rises above the lower limit value and intervals where the flow exceeds the upper limit value on the flow upper limit curve 41 and then drops below the upper limit value.

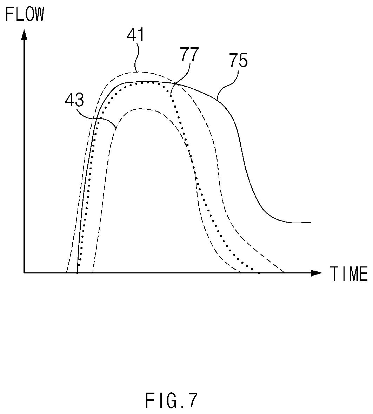

With reference to FIG. 7, the graph shows a flow upper limit curve 41 and a flow lower limit curve 43 included in the reference operating data, first flow data 75 corresponding to the first air cylinder, and second flow data 77 corresponding to the second air cylinder.

According to an embodiment, the processor 34, based on the flow data 75 and 77, may determine that the plurality of air cylinders 300 are not operating in sync because the end time points of operating of the first and second air cylinders are different, despite the start time points being identical, and there is a time point where the flow different exceeds a predetermined value.

According to an embodiment, it may be possible to determine, based on the first flow data 75, that the first air cylinder is in an air leak state because the flow of the first air cylinder rises above the upper limit value on the flow upper limit curve 41 and fails to recover to the normal range based on the reference operating data.

According to an embodiment, it may be possible to determine, based on the second flow data 77, that the second air cylinder is in a normal state because the flow of the second air cylinder is within the normal range based on the reference operating data.

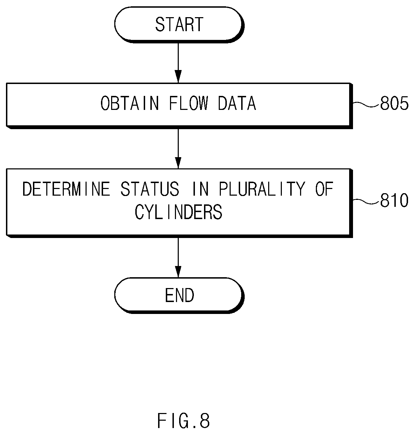

FIG. 8 is a flowchart illustrating the operation of a cylinder monitoring apparatus according to an embodiment. FIG. 8 may illustrate the operation of the cylinder monitoring apparatus 30 in FIG. 3, and the description may be made on the basis of the configurations shown in FIGS. 1 to 3.

The embodiment shown in FIG. 8 is merely one embodiment, and the order of operations according to various embodiments of the present invention may be different from that shown in FIG. 8, and some operations shown in FIG. 8 may be omitted, changed in order, or merged.

With reference to FIG. 8, in operation 805, the cylinder monitoring apparatus 30 may acquire flow data representing the flow measured by the flow sensors 450 and/or 460 of the chamber 10. According to an embodiment, the cylinder monitoring apparatus 30 may acquire the flow data from the communication circuit of the chamber 10 using the communication circuit 31 via wired and/or wireless means.

According to an embodiment, the flow data may represent the inflow or outflow of air supplied to or discharged from the plurality of air cylinders 300. According to an embodiment, the flow data may include the first flow data corresponding to the first air cylinder located on the left side of the chamber body 100 among the plurality of air cylinders 300 and the second flow data corresponding to the second air cylinder located on the right side of the chamber body 100. In detail, the first flow data (or second flow data) may represent the flow of air supplied to or discharged from the first air cylinder (or second air cylinder).

In operation 810, the cylinder monitoring apparatus 30 may determine the state of the plurality of air cylinders based on the flow data acquired in operation 805. Here, the status may include the synchronous operation and/or abnormality of the plurality of air cylinders 300.

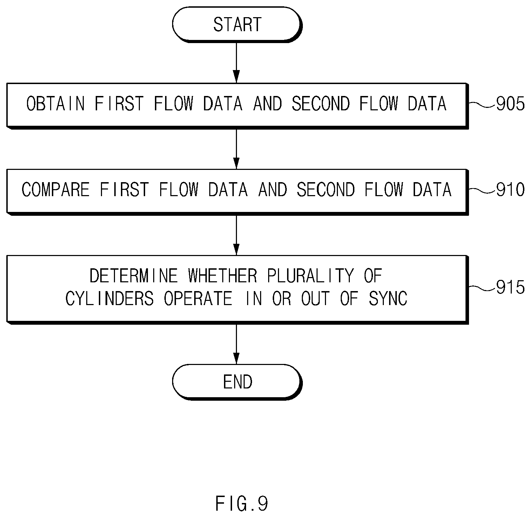

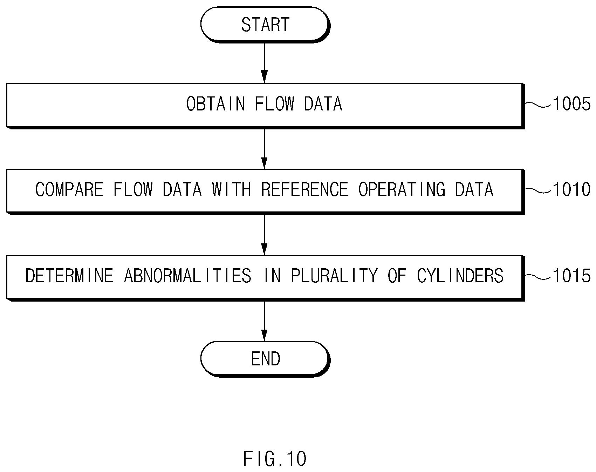

The operation of the cylinder monitoring apparatus 30 determining the synchronous operation of the plurality of air cylinders 300 may be described in detail with reference to FIG. 9, and the operation of the cylinder monitoring apparatus 30 determining abnormalities in the plurality of air cylinders 300 may be described in detail with reference to FIG. 10.

FIG. 9 is a flowchart illustrating the operation of a cylinder monitoring apparatus according to an embodiment. FIG. 9 may illustrate the operation of the cylinder monitoring apparatus 30 in FIG. 3, and the description may be made on the basis of the configurations shown in FIGS. 1 to 3.

The embodiment shown in FIG. 9 is merely one embodiment, and the order of operations according to various embodiments of the present invention may be different from that shown in FIG. 9, and some operations shown in FIG. 9 may be omitted, changed in order, or merged.

With reference to FIG. 9, in operation 905, the cylinder monitoring apparatus 30 may acquire the first flow data corresponding to the first air cylinder among the plurality of air cylinders 300 and the second flow data corresponding to the second air cylinder.

In operation 910, the cylinder monitoring apparatus 30 may compare the first flow data and the second flow data acquired in operation 905. According to an embodiment, the cylinder monitoring apparatus 30 may compare the start and end time points of the first and second air cylinders. According to an embodiment, the cylinder monitoring apparatus 30 may compare the flow of the first air cylinder with the flow of the second air cylinder. For example, the cylinder monitoring apparatus 30 may calculate the temporal difference between the flow of the first air cylinder and the flow of the second air cylinder.

In operation 915, the cylinder monitoring apparatus 30 may determine whether the plurality of air cylinders 300 are operating in sync based on the result of comparison in operation 910.

According to an embodiment, the cylinder monitoring apparatus 30 may determine that the first and second cylinders are operating in sync when the start and end time points of the first and second air cylinders are identical.

According to an embodiment, the cylinder monitoring apparatus 30 may determine that the first and second cylinders are operating out of sync when there is a certain time point where the flow difference between the first and second cylinders is above a predetermined value.

According to an embodiment, the cylinder monitoring apparatus 30 may consider both the start and end times of operation and the flow difference to determine the synchronous operation. For example, the cylinder monitoring apparatus 30 may determine that the first and second air cylinders are operating in sync based on the identical start and end time points of the first and second air cylinders and the flow difference remaining below a predetermined value.

FIG. 10 is a flowchart illustrating the operation of a cylinder monitoring apparatus according to an embodiment. FIG. 10 may illustrate the operation of the cylinder monitoring apparatus 30 in FIG. 3, and the description may be made on the basis of the configurations shown in FIGS. 1 to 3.

The embodiment shown in FIG. 10 is merely one embodiment, and the order of operations according to various embodiments of the present invention may be different from that shown in FIG. 10, and some operations shown in FIG. 10 may be omitted, changed in order, or merged.

With reference to FIG. 10, in operation 1005, the cylinder monitoring apparatus 30 may acquire flow data representing the flow measured by the flow sensors 450 and/or 460 of the chamber 10. According to an embodiment, the cylinder monitoring apparatus 30 may acquire the flow data from the communication circuit of the chamber 10 using the communication circuit 31 via wired and/or wireless means.

In operation 1010, the cylinder monitoring apparatus 30 may compare the flow data acquired in operation 1005 with the reference operating data. Here, the reference operating data may be data preset based on the flow data of normally operating air cylinders. For example, the cylinder monitoring apparatus 30 may generate flow upper limit and flow lower limit curves based on the flow data of normally operating air cylinders as reference operating data.

According to an embodiment, the cylinder monitoring apparatus 30 may compare the flow data with the flow upper limit curve and the flow lower limit curve included in the reference operating data.

In operation 1015, the cylinder monitoring apparatus 30 may determine abnormalities (e.g., operation stop, air leak, and/or load abnormalities) in the plurality of air cylinders 300 based on the result of the comparison in operation 1010.

According to an embodiment, the cylinder monitoring apparatus 30 may determine that an air cylinder, whose flow drops below the lower limit value on the flow lower limit curve and fails to recover to the normal range based on the reference operating data, is in an operation stop state. Here, the normal range may refer to the range of flow between the flow upper limit and the flow lower limit of the reference operating data.

According to an embodiment, the cylinder monitoring apparatus 30 may determine that an air cylinder, whose flow rises above the upper limit value on the flow upper limit curve and fails to recover to the normal range, is in an air leak state. Here, an air leak may refers to the escape of air due to issues such as cracks in the air cylinder, resulting in the unintended leakage of air flowing into or out of the air cylinder.

According to an embodiment, the cylinder monitoring apparatus 30 may determine that an air cylinder, whose flow rises above the upper limit value on the flow upper limit curve and then drops below the upper limit value or drops below the lower limit value on the flow lower limit curve and then rises above the lower limit value, is in a load abnormality state.

Also, the terms such as "comprise", "include", or "have" used above implies that the corresponding component may be present unless otherwise stated specifically, and thus it should be construed as being able to further include other components rather than exclude other components. Unless otherwise defined herein, all terms including technical or scientific terms used herein have the same meanings as commonly understood by those skilled in the art to which the present invention belongs. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

## Claims

1. A cylinder monitoring apparatus comprising:
a communication circuit obtaining flow data representing flow measured by a flow sensor sensing air inflow to or air outflow from a plurality of air cylinders operating a chamber comprising a lower body and an upper body positioned above the lower body; and
a processor determining the operation status, including whether the plurality of the air cylinders are operating in or out of sync, based on the flow data.

2. The cylinder monitoring apparatus of claim 1, wherein the plurality of air cylinders comprises a first air cylinder and a second air cylinder, the flow data comprises first flow data corresponding to the first air cylinder and second flow data corresponding to the second air cylinder, and the processor determines the operation in or out of sync by comparing the first flow data and the second flow data.

3. The cylinder monitoring apparatus of claim 2, wherein the processor determine that the operation is out of sync based on the difference between the flow of the first air cylinder and the flow of the second air cylinder being above a predetermined value at a time point.

4. The cylinder monitoring apparatus of claim 1, wherein the processor determine an abnormality in the plurality of air cylinders by comparing the flow data with a flow upper limit curve and a flow lower limit curve included in reference operating data.

5. The cylinder monitoring apparatus of claim 4, wherein the processor determines, among the plurality of air cylinders, an air cylinder, whose flow drops below a lower limit value on the flow lower limit curve and fails to recover to a normal range based on the reference operating data, is in an operation stop state.

6. The cylinder monitoring apparatus of claim 4, wherein the processor determines, among the plurality of air cylinders, an air cylinder, whose flow rises above an upper limit value on the flow upper limit curve and fails to recover to a normal range based on the reference operating data, is in an air leak state.

7. The cylinder monitoring apparatus of claim 4, wherein the processor determines, among the plurality of air cylinders, an air cylinder, whose flow rises above an upper limit value on the flow upper limit curve and then drops below the upper limit value or drops below a lower limit value on the flow lower limit curve and then rises above the lower limit value, is in a load abnormality state.

8. The cylinder monitoring apparatus of claim 1, further comprising a display displaying a graph representing the flow of air supplied to or discharged from the plurality of air cylinder based on the flow data.

9. A cylinder monitoring method comprising:
obtaining flow data representing flow measured by a flow sensor sensing air inflow to or air outflow from a plurality of air cylinders operating a chamber comprising a lower body and an upper body positioned above the lower body; and
determining the operation status, including whether the plurality of the air cylinders are operating in or out of sync, based on the flow data.

10. The cylinder monitoring method of claim 9, wherein the plurality of air cylinders comprises a first air cylinder and a second air cylinder, the flow data comprises first flow data corresponding to a first air cylinder and second flow data corresponding to a second air cylinder, and the determining of the operation status comprises determining the operation in or out of sync by comparing the first flow data and the second flow data.

11. The cylinder monitoring method of claim 10, wherein the determining of the operation in or out of sync comprises determining that the operation is out of sync based on the difference between the flow of the first air cylinder and the flow of the second air cylinder being above a predetermined value at a time point.

12. The cylinder monitoring method of claim 9, wherein the determining of the operation status comprises determining an abnormality in the plurality of air cylinders by comparing the flow data with a flow upper limit curve and a flow lower limit curve included in reference operating data.

13. The cylinder monitoring method of claim 12, wherein the determining of the abnormality in the plurality of air cylinders comprises determining, among the plurality of air cylinders, an air cylinder, whose flow drops below a lower limit value on the flow lower limit curve and fails to recover to a normal range based on the reference operating data, is in an operation stop state.

14. The cylinder monitoring method of claim 12, wherein the determining of the abnormality in the plurality of air cylinders comprises determining, among the plurality of air cylinders, an air cylinder, whose flow rises above an upper limit value on the flow upper limit curve and fails to recover to a normal range based on the reference operating data, is in an air leak state.

15. The cylinder monitoring method of claim 12, wherein the determining of the abnormality in the plurality of air cylinders comprises determining, among the plurality of air cylinders, an air cylinder, whose flow rises above an upper limit value on the flow upper limit curve and then drops below the upper limit value or drops below a lower limit value on the flow lower limit curve and then rises above the lower limit value, is in a load abnormality state.
